(19) Europäisches Patentamt

European Patent Office

Office européen des brevets

(11) **EP 1 310 763 B1**

(12) **EUROPEAN PATENT SPECIFICATION**

(45) Date of publication and mention
of the grant of the patent:
**28.06.2006 Bulletin 2006/26**

(51) Int Cl.:
*G01B 11/00* (2006.01)    *G01M 13/04* (2006.01)

(21) Application number: **02720562.4**

(22) Date of filing: **22.04.2002**

(86) International application number:
**PCT/JP2002/004003**

(87) International publication number:
**WO 2002/090884 (14.11.2002 Gazette 2002/46)**

(54) **METHOD AND DEVICE FOR DETECTING CRANKSHAFT INSTALLATION POSITION, AND PROGRAM FOR DETECTING THE INSTALLATION POSITION**

Verfahren und Vorrichtung zum Detektieren der Einstellposition einer Kurbelwelle, und Programm zur Detektion der Einstellposition.

PROCEDE ET DISPOSITIF POUR DETECTER LA POSITION D'INSTALLATION D'UN VILEBREQUIN ET PROGRAMME POUR DETECTER CETTE POSITION D'INSTALLATION

(84) Designated Contracting States:
**DK FI**

(30) Priority: **01.05.2001 JP 2001133744**
**06.11.2001 JP 2001340095**

(43) Date of publication of application:
**14.05.2003 Bulletin 2003/20**

(73) Proprietor: **Hitachi Zosen Corporation**
**Osaka-shi,**
**Osaka 559-0034 (JP)**

(72) Inventor: **SUGIMOTO, Iwao,**
**c/o HITACHI ZOSEN CORPORATION**
**Osaka-shi,**
**Osaka 559-0034 (JP)**

(74) Representative: **Engelhardt, Harald et al**
**le Vrang & Engelhardt,**
**Fliederstrasse 1**
**85139 Wettstetten (DE)**

(56) References cited:
**EP-A1- 0 015 654**    **JP-A- 7 318 459**
**JP-A- 8 091 283**    **JP-A- 2000 028 348**
**JP-A- 2000 088 709**    **JP-A- 2001 039 382**

**Description**

Technical Field

The present invention relates to a method of detecting an installation position of a crankshaft in an engine of a ship, a detector, and a program for detecting the installation position.

Background Art

In general, when an engine is installed in a ship, it is necessary to accurately detect the center position of a crankshaft.

Conventionally, as a device for adjusting the center position of a crankshaft, an automatic centering measuring device of a main engine disclosed in Publication of Japanese Unexamined Patent Application No. 8-91283 has been available.

The centering automatic measuring device is configured such that distortion sensors are attached respectively between opposing surfaces of a pair of fore-and-aft couplings connecting a main engine (diesel engine) and a propeller shaft for rotating a propeller and between crank arms of the main engine, the crankshaft is rotated once, a displacement (displacement in an axial direction) on a position of a prescribed angle is detected relative to a reference position, the displacement is retrieved by a computer device, the detected displacement is subsequently visualized on a screen, and the height of the bearing on the crankshaft is adjusted depending upon experience of an operator who views a visualized graph.

According to the configuration of the centering automatic measuring device, crank arms having a displaced distance can be detected to specify a bearing to be subjected to height adjustment on the crankshaft. However, it is not possible to specify a degree of height adjustment, that is, the position of the crankshaft cannot be accurately detected. Hence, actual height adjustment depends upon experience of an operator and thus the adjustment cannot be quickly performed with accuracy.

For this reason, the present invention has as its objective the provision of a method of detecting an installation position of a crankshaft, an installation position detector, and a program for detecting an installation position whereby a position of the crankshaft can be quickly detected with accuracy.

Disclosure of the Invention

A first method of detecting an installation position of a crankshaft according to the present invention is a method of detecting an installation position of a crankshaft in an engine having a plurality of pistons arranged in series, wherein the method comprises: a step of inputting a measured value of crankshaft deflection serving as a displacement amount between crank arms, the displacement amount being actually measured on crank throws corresponding to pistons; a step of setting temporarily installation positions as data regarding bearings other than a reference bearing at a reference installation position on the crankshaft; a step of calculating crankshaft deflection on each crank throw by using transfer-matrix method based on the temporary installation position set in the setting step; a step of deciding whether an evaluation value is within a permissible range or not after the evaluation value is calculated based on a difference between a calculated deflection value obtained in the calculating step and the measured deflection value; and a step of producing another temporary installation position based on the genetic algorithm when the deciding step decides that the evaluation value is out of a permissible range, wherein crankshaft deflection is calculated based on the newly produced temporary installation position to repeat the step of producing a temporary installation position based on the genetic algorithm until an evaluation value comes within the permissible range, the evaluation value being obtained based on a difference between a calculated deflection value and the measured deflection value on each crank throw, and a temporary installation position at a point of time when an evaluation value comes within the permissible range is detected as an installation position of the crankshaft.

Further, a second method of detecting an installation position of a crankshaft according to the present invention is such that in the first method, the installation position is a height position and/or a horizontal position.

A first detector for detecting an installation position of a crankshaft according to the present invention is a detector detecting an installation position of a crankshaft in an engine having a plurality of pistons arranged in series, wherein the detector comprises: temporary installation position setting means for temporarily setting installation positions of crankshafts as data; crankshaft deflection calculating means for calculating crankshaft deflection serving as a displacement amount between crank arms on each crank throw by using transfer-matrix method based on the temporary installation position set by the temporary installation position setting means; evaluation value calculating means for calculating an evaluation value based on a difference between a calculated deflection value obtained by the crankshaft deflection calculating means and a measured deflection value measured by crankshaft deflection measuring means;

deciding means for deciding whether an evaluation value calculated by the evaluation value calculating means is within a permissible range or not and deciding that the temporary installation position is an installation position of the crankshaft when the evaluation value is within the permissible range; and installation position changing means for performing a genetic algorithm on the temporary installation position to produce another temporary installation position when the deciding means decides that the evaluation value is out of the permissible range, wherein a deflection value is calculated by using the new temporary installation position when a new temporary installation position is produced by the installation position changing means, and the step of producing a temporary installation position based on the genetic algorithm is repeated until an evaluation value is within the permissible range, the evaluation value being obtained based on a difference between a calculated deflection value and the measured deflection value.

Further, a second detector for detecting an installation position of a crankshaft is according to the present invention is such that in the first detector, the installation position is a height position and/or a horizontal position.

A first program for detecting an installation position of a crankshaft according to the present invention is a program causing a computer device to compute and detect an installation position of a crankshaft in an engine having a plurality of pistons arranged in series based on a displacement amount (hereinafter, referred to as crankshaft deflection) between crank arms, wherein the program comprises: an inputting step of inputting a measured value of crankshaft deflection actually measured on crank throws corresponding to pistons; a setting step of temporarily setting installation positions as data regarding bearings other than a reference bearing of the crankshaft at a reference installation position; a calculating step of calculating crankshaft deflection on each crank throw by using the transfer-matrix method based on the temporary installation position set in the setting step; a deciding step of deciding whether an evaluation value is within a permissible range or not after the evaluation value is calculated based on a difference between a calculated deflection value obtained in the calculating step and the measured and inputted deflection value; an installation position changing step of producing a new temporary installation position based on a genetic algorithm when the deciding step decides that the evaluation value is out of the permissible range; and a command step of causing the calculating step to calculate crankshaft deflection based on the newly produced temporary installation position and repeating the step of producing a temporary installation position based on the genetic algorithm in the installation position changing step until an evaluation value comes within the permissible range, the evaluation value being obtained based on a difference between the calculated deflection value and the measured deflection value on each crank throw.

Further, a second program for detecting an installation position of a crankshaft according to the present invention is such that in the first program for detecting an installation position of a crankshaft, the installation position is a height position and/or a horizontal position.

According to the configurations of the present invention, when an installation position of the crankshaft is detected, that is, when an installation height or/and installation horizontal position is detected, the installation positions of the bearings are temporarily set in advance, crankshaft deflection on each crank throw is calculated based on the temporary installation positions by using the transfer-matrix method, an evaluation value is calculated based on a difference between a calculated deflection value and an actually measured deflection value, and the evaluation value and a permissible value are compared with each other. When the evaluation value is within a permissible range, it is decided that the temporary installation position is proper. Meanwhile, when the evaluation value is out of the permissible range, the genetic algorithm is performed on data row of the temporary installation position to set data row of a new temporary installation position, a deflection value is calculated again, and the evaluation value and the permissible range are compared with each other. These steps are repeated until an evaluation value enters the permissible range, thus allowing it to quickly detect an installation position of the crankshaft with accuracy, as compared with the conventional art depending upon experiences of an operator.

Brief Description of the Drawings

FIG. 1 is a schematic diagram of a crankshaft, illustrating a detection target of a preferred detecting method of an installation height according to the present invention;

FIG. 2 is a block diagram schematically showing a preferred detector for detecting an installation height according to the present invention;

FIG. 3 is a block diagram schematically showing crankshaft deflection measuring device in the detector for detecting an installation height;

FIG. 4 is a side view showing a state in which a measuring part of the crankshaft deflection measuring device is attached to the crankshaft;

FIG. 5 is a view showing measuring positions on the crankshaft measured by the measuring part of the crankshaft deflection measuring device;

FIG. 6 is a general diagram showing global coordinate systems of the crankshaft;

FIG. 7 is a schematic front view showing the crankshaft on one crank throw;

FIG. 8 is a schematic side view showing local coordinate systems of the crankshaft;

FIG. 9 is a schematic diagram showing steps of calculating crankshaft deflection of the crankshaft;

FIG. 10 is a flowchart schematically showing steps of a detecting method of an installation height of the crankshaft;

FIG. 11 is a flowchart showing steps in detail of the detecting method of an installation height of the crankshaft;

FIG. 12 is a flowchart showing the steps in detail of the detecting method of an installation height of the crankshaft;

FIG. 13 is a graph showing crankshaft deflection and set installation heights in the detecting method of an installation height of the crankshaft;

FIG. 14 is a graph showing measured deflection values in the detecting method of an installation height of the crankshaft; and

FIG. 15 is a graph showing calculated deflection values in the detecting method of an installation height of the crankshaft.

Best Mode for Carrying Out the Invention

The following will provide more specific description of the present invention in accordance with the accompanied drawings.

The present invention relates to detection of an installation position, to be specific, detection of an installation height and an installation horizontal position of a crankshaft in an engine for a ship.

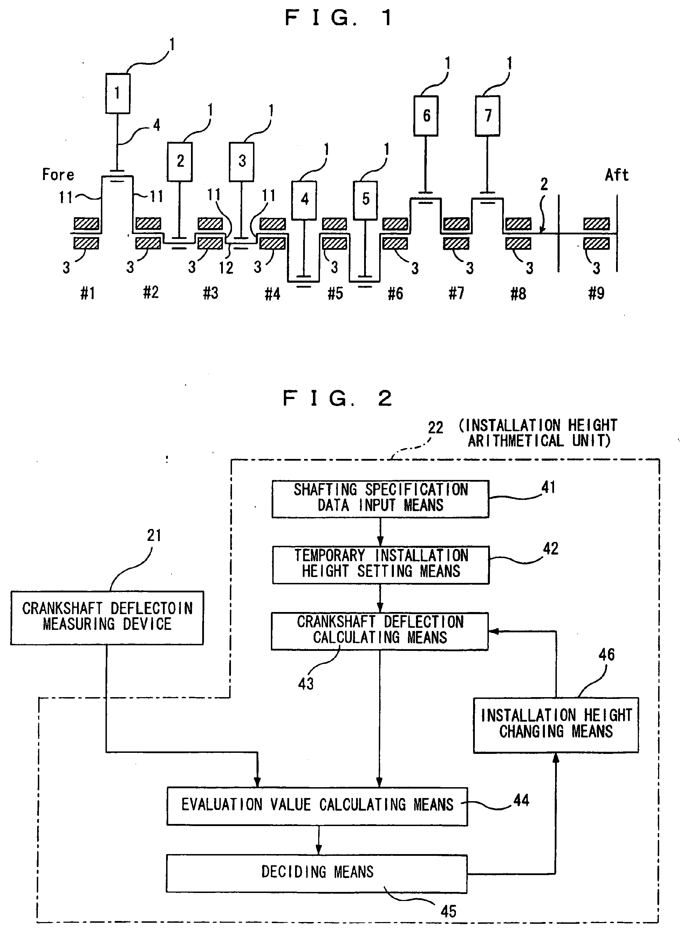

Incidentally, detection of an installation height and detection of an installation horizontal position are fundamentally performed in the same steps. Thus, referring to FIGS. 1 to 15, the present embodiment will mainly discuss an installation height detector and a method of detecting an installation height of a crankshaft and will briefly discuss an installation horizontal position detector and a method of detecting an installation horizontal position of a crankshaft.

The crankshaft of the present embodiment is provided on, for example, a large engine for a ship, and in the installation height detector and the method of detecting an installation height, a center height position of each bearing for receiving the crankshaft is detected as an installation height when the engine is set in a hull or during maintenance of the engine.

Referring to FIG. 1, as an engine of the present embodiment, the following will discuss the case where a crankshaft 2 is rotated by seven pistons 1. Namely, at least eight bearings 3 are provided. The rear end on the side of the aft of the crankshaft 2 is supported by a bearing 3 further provided on a bulkhead. Therefore, the installation height of the crankshaft is detected as a center height of the bearings 3 at eight points (positions #1 to #8). Besides, #1 indicates the position of the bearing 3 on the side of the fore, #8 indicates the position of the bearing 3 on the side of the aft, and #9 indicates the position of the bearing 3 provided on the bulkhead. Certainly, on the positions corresponding to the pistons 1 of the crankshaft 2, crank pins 12 are provided via crank arms 11, and the crank pins 12 and the pistons 1 are connected to each other via connecting rods 4.

The installation height detector will be discussed below.

As shown in FIG. 2, the installation height detector is mainly constituted by a crankshaft deflection measuring device 21 and an installation height arithmetical unit 22. The crankshaft deflection measuring device 21 measures a displacement (also referred to as crankshaft deflection, hereinafter, referred to as crankshaft deflection) between the crank arms 11, and the installation height arithmetical unit 22 calculates crankshaft deflection based on a temporary installation height which is temporarily set as data, evaluates the temporary installation height by making comparison with a measured deflection value inputted from the crankshaft deflection measuring device 21, and detects the most precise installation height.

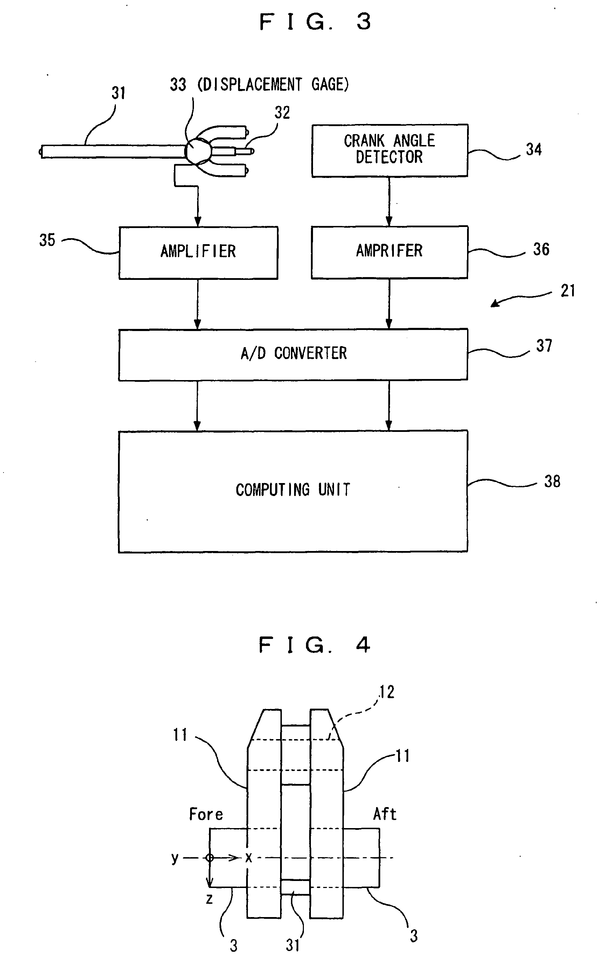

As shown in FIGS. 3 and 4, the crankshaft deflection measuring device 21 is constituted by a mounting body 31 which is shaped like a letter Y and is inserted between the crank arms 11, a measuring bar 32 which is placed on a bifurcated part of the mounting body 31 and freely advances and retreats from the bifurcated part via a spring, a displacement gage 33 which is similarly mounted on the mounting body 31 and detects a advancing/retreating amount of the measuring bar 32 as an electric signal, a crank angle detector (e.g., a rotational pulse meter is used) 34 for detecting a rotation angle of the crankshaft 2, and a computing unit 38 which inputs detection signals from the displacement gage 33 and the crank angle detector 34 respectively via amplifiers 35 and 36 and an A/D converter 37 and calculates crankshaft deflection at a prescribed crank angle. Besides, as with the measuring bar 32, both ends of the bifurcated part of the mounting body 31 are also placed so as to freely advance and retreat via springs. This arrangement is provided for holding the mounting body 31 between the crank arms 11. Therefore, the spring placed on the measuring bar 32 is larger in pressing force than the springs placed on both ends of the bifurcated part of the mounting body 31.

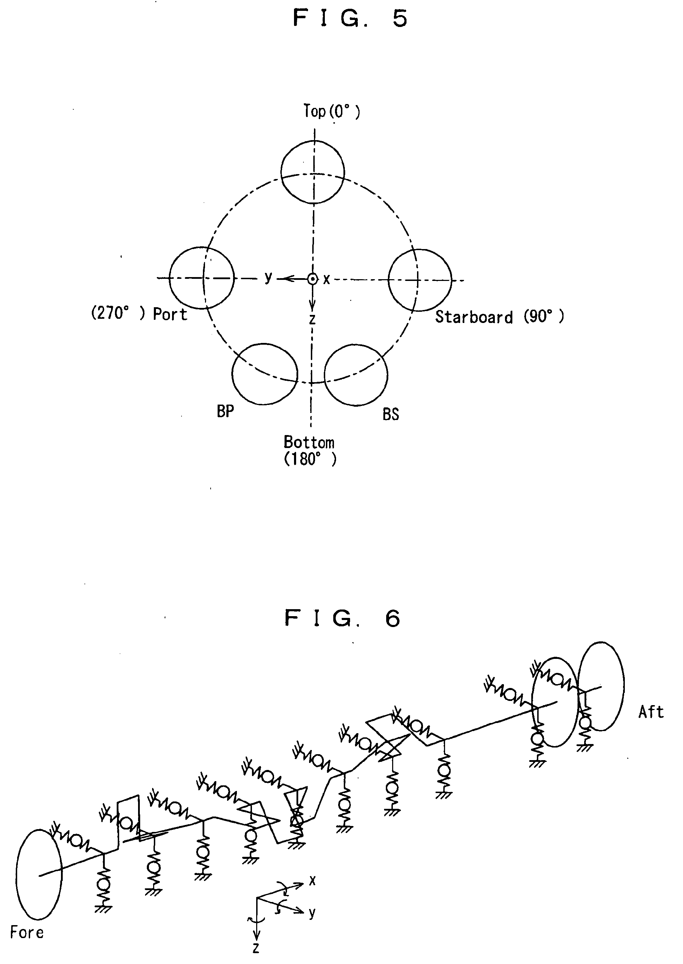

When crankshaft deflection is measured by the crankshaft deflection measuring device 21, as shown in FIGS. 4 and 5, after the mounting body 31 is set between the crank arms 11 and on the opposite side from the crank pin 12, substantially one rotation is made and crankshaft deflection is measured when the crank pin 12 is positioned at the top (Top at 0°) and the bottom (Bottom at 180°). In the present embodiment, the measurement is made on the top and the bottom to detect an installation height in a perpendicular direction. Therefore, when displacement of the installation position of the crankshaft 2 is detected in a horizontal direction, measurement is preferably made when the crankshaft 2 is positioned on the starboard at 90° and the port at 270°.

Incidentally, when the bottom is actually measured, the connecting rod interferes with the measurement. Thus, measurement is made on two points of BS (Starboard of Bottom) and BP (Port of Bottom) which are slightly displaced from the bottom in a horizontal direction, and an average value of the measurement values on the two points is taken as a measurement value of the bottom.

The following will discuss the installation height arithmetical unit 22.

The installation height arithmetical unit 22 is constituted by a computer device, data input means such as a keyboard, output means such as an image display device, storage means for storing various programs for computation and data.

The installation height arithmetical device 22 previously sets installation heights of the bearings 3 temporarily as initial data, calculates crankshaft deflection based on the set temporary heights by using arithmetic equations, evaluates a difference between a calculated deflection value and a measured deflection value obtained by the crankshaft deflection measuring device 21, and decides whether the set temporary installation height is proper or not.

Namely, as shown in FIG. 2, the installation height arithmetical unit 22 is constituted by shafting specification data input means 41 which inputs specification data of the crankshaft, for example, various kinds of data including the number of cylinders (pistons), a stroke, a mass (weight) of a crank throw (a part corresponding to one piston on both of the crank arms and the crank pin), cross-sectional secondary moment, and polar moment of inertia area, and the dimensions of a journal, the crank pin, the crank arms and so on, temporary installation height setting means 42 for temporarily setting the installation heights of the bearings 3 as data within a prescribed range, crankshaft deflection calculating means 43 for calculating crankshaft deflection corresponding to each crank throw by using the temporary installation height set by the temporary installation height setting means 42, evaluation value calculating means 44 which inputs a deflection value calculated by the crankshaft deflection calculating means 43 and a measured deflection value measured by the crankshaft deflection measuring device 21 and calculates an evaluation value based on a difference between the deflection values, deciding means 45 which inputs and compares an evaluation value calculated by the evaluation value calculating means 44 and a predetermined permissible value (an example of a permissible range that is set as a lower limit value or an upper limit value depending upon an evaluation expression. In this case, the value is set as a lower limit value.), decides that the set installation height is proper and outputs the decision when the evaluation value exceeds the permissible value (within the permissible range), and decides that the set installation height is improper when the evaluation value is equal to or lower than the permissible value (out of the permissible range), and installation height changing means 46 which produces (estimates) another temporary installation height by performing a genetic algorithm (genetic operation) on the set temporary installation height when the deciding means 45 decides that the set installation height is improper.

The following will discuss the detail of the configuration of the above-described means together with the functions thereof.

The shafting specification data input means 41 inputs the number of cylinders required for computation, a stroke, a mass (weight) of the crank throw, cross-sectional secondary moment, and polar moment of inertia of area, and the dimensions of the journal, the crank pin, the crank arm and so on.

Further, in the temporary installation height setting means 42, an installation height of a first bearing (reference bearing) 3 (#1) on the side of the fore is set at 0 as a reference value (reference installation height) and installation heights of seven second to eight bearings 3 (#2 to #8) adjacent to the above bearing 3 are temporarily set, for example, in the -0.400 to +0.375 mm range with a 0.025-mm spacing by using, for example, a random function

Such installation height range and height spacing are provided for the following reason: when a more proper temporary installation height is calculated by the installation height changing means, which will be discussed later, using the genetic algorithm, the installation height is expressed in binary code of "0" and "1". When the above -0.400 to +0.375 mm range is converted into a numerical form with the 0.025-mm spacing, 32 levels are obtained. Five bits (32 levels) are necessary for expressing the range in a binary code of "0" and "1". Namely, the installation heights of the bearings 3 (#2 to #8) other than the reference bearing 3 (#1) can be expressed by 5-bit data and thus the heights of the seven bearings 3 can be expressed as combined data strings (pieces of data indicating the heights of the seven bearings are arranged in series) in 35-bit data (5 bits x seven bearings). Additionally, the installation height is converted into a binary code only when the genetic algorithm is used. In the other operations, the installation height is expressed in decimal number. Certainly, when the installation heights of the plurality of bearings 3 are expressed in decimal numbers in combination, the installation heights are referred to as data strings.

Then, data strings concerning firstly set temporary installation heights of the bearings are provided in one set or more, for example, in 46 sets (certainly, the number of sets is not limited to 46 and is properly increased or decreased).

Then, in the crankshaft deflection calculating means 43, crankshaft deflection on each crank throw is calculated by computation using transfer-matrix method based on data (data strings) of the temporary installation heights.

In the transfer-matrix method, when displacements (hereinafter, also referred to as a state quantity) of the parts are calculated over the crankshaft 2, a field transfer matrix equation (coefficient is referred to as a field transfer matrix) is used for transferring displacement on a straight line such as a beam, and a point transfer matrix equation (coefficient is referred to as a point transfer matrix) is used for transferring displacement on a supporting point interrupting the continuing beam.

In the above explanation, the transfer-matrix method is used along the crankshaft 2. The direction along the crankshaft core (also serving as the core of the journal) is used as global coordinate systems (expressed by x, y, and z and also referred to as absolute coordinate systems) and the direction along the crank arms 11 and the crank pins 12 is used as local coordinate systems (expressed by x, t, and r and is also referred to as relative coordinate systems).

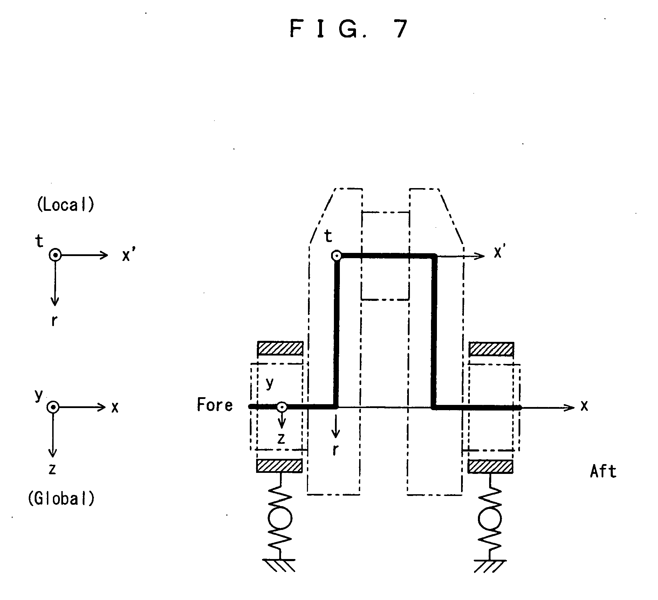

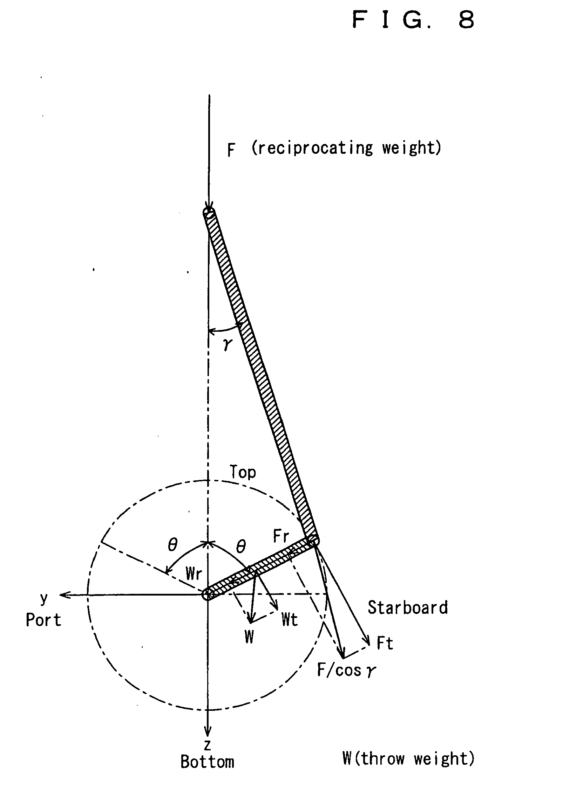

Besides, FIG. 6 is a general view showing a model of the crankshaft 2, FIG. 7 shows how global coordinate axes are set for one crank throw, and FIG. 8 shows how local coordinate axes are set for one crank throw.

The following reference characters will not be particularly mentioned in the explanation below.

a: initial length between the crank arms
A: cross-sectional area
D: distance between the crank arms
Def: crankshaft deflection
E: modulus of longitudinal elasticity
F: shearing force
G: modulus of shearing elasticity
I: cross-sectional secondary moment
J: polar moment of inertia area
k: stiffness of spring supports
L: length
M: bending moment
T: twisting moment
θ: crank angle

First, as shown in the equation below, an equation is produced with a state quantity (displacement and working force) B being set as an unknown on the bearing on the side of the fore. Besides, in the equation below, S represents a field transfer matrix, P represents a point transfer matrix, R represents a boundary matrix indicating a boundary condition on the side of the fore, and R' represents a boundary matrix on the side of the aft. These are all known matrixes.

$$R'S_{ns}P_{ns-1}S_{ns-1} \cdots P_1 S_1 RB = 0$$

The subscript ns in the above equation indicates the number of sections on the shaft between the fore end and the aft end, the shaft being divided by the bearings. Further, the state quantity B on the side of the fore is calculated by solving the above equation.

The state quantity B is equivalent to a displacement vector q and a force vector Q which will be discussed later. Hereinafter, the field transfer matrix equation and the point transfer matrix equation are repeatedly used with the state quantity serving as an initial value, and a state quantity is calculated over the crankshaft.

Namely, the displacement vector q and the force vector Q, which are state quantities in the global coordinate systems, are indicated in equations (1) and (2) below. Here, the vectors in the equations are indicated in boldface type.

$$q = \begin{bmatrix} d_x & d_y & d_z & \phi_x & \phi_y & \phi_z \end{bmatrix}^T \qquad (1)$$

$$Q = \begin{bmatrix} T_x & M_y & M_z & F_x & F_y & F_z \end{bmatrix}^T \qquad (2)$$

Here, in equation (1), $d_x$, $d_y$, and $d_z$ represent displacement or distortion and $\varphi_x$, $\varphi_y$, and $\varphi_z$ represent an angle of twist or a slope. In equation (2), $T_x$, $M_y$, and $M_z$ represent twisting moment or bending moment and $F_x$, $F_y$, and $F_z$ represent axial force or shearing force.

Further, displacement vector q' and force vector Q', which are state quantities of the local coordinate systems, are indicated in equations (3) and (4) below.

$$q' = [d_x \quad d_t \quad d_r \quad \phi_x \quad \phi_t \quad \phi_r]^T \qquad (3)$$

$$Q' = [T_x \quad M_t \quad M_r \quad F_x \quad F_t \quad F_r]^T \qquad (4)$$

Similarly, in equation (3), $d_x$, $d_t$, and $d_r$ represent displacement or distortion and $\varphi_x$, $\varphi_t$, and $\varphi_r$ represent an angle of twist or a slope. In equation (4), $T_x$, $M_t$, and $M_r$ represent twisting moment or bending moment and $F_x$, $F_t$, and $F_r$ represent axial force or shearing force.

The following will discuss the field transfer matrix equation and the point transfer matrix equation that are used in the transfer-matrix method.

The point transfer matrix equation for calculating a state quantity from the fore (on the side of the fore indicated by a subscript "F") to the aft (on the side of the aft indicated by a subscript "A") is expressed by equation (5) below. Here, in equation (5), i represents a bearing number (a number of a shaft divided by the bearings).

$$\begin{bmatrix} q \\ Q \\ 1 \end{bmatrix}_i^A = \begin{bmatrix} f_1 & f_2 & q_0^A \\ 0 & f_1 & Q_0^A \\ 0 & 0 & 1 \end{bmatrix}_i \begin{bmatrix} q \\ Q \\ 1 \end{bmatrix}_i^F \qquad (5)$$

where

$$f_1 = \begin{bmatrix} 1 & 0 & 0 & 0 & 0 & 0 \\ 0 & 1 & 0 & 0 & 0 & L \\ 0 & 0 & 1 & 0 & -L & 0 \\ 0 & 0 & 0 & 1 & 0 & 0 \\ 0 & 0 & 0 & 0 & 1 & 0 \\ 0 & 0 & 0 & 0 & 0 & 1 \end{bmatrix}$$

$$
f_2 = \begin{bmatrix}
0 & 0 & 0 & \dfrac{-L}{EA} & 0 & 0 \\[2mm]
0 & 0 & \dfrac{-L^2}{2EI_z} & 0 & \dfrac{L^3}{6EI_z} & 0 \\[2mm]
0 & \dfrac{L^2}{2EI_y} & 0 & 0 & 0 & \dfrac{L^3}{6EIy} \\[2mm]
\dfrac{-L}{GJ} & 0 & 0 & 0 & 0 & 0 \\[2mm]
0 & \dfrac{-L}{EI_y} & 0 & 0 & 0 & \dfrac{-L^2}{2EI_y} \\[2mm]
0 & 0 & \dfrac{-L}{EI_z} & 0 & \dfrac{L^2}{2EI_z} & 0
\end{bmatrix}
$$

Next, a coordinate transformation (transfer equation) for converting a state quantity from the global coordinate systems to the local coordinate systems is expressed by equation (6).

$$
\begin{bmatrix} q' \\ Q' \\ 1 \end{bmatrix}_i = \begin{bmatrix} g_1 & 0 & 0 \\ 0 & g_1 & 0 \\ 0 & 0 & 1 \end{bmatrix} \begin{bmatrix} q \\ Q \\ 1 \end{bmatrix}_i \qquad (6)
$$

where

$$
g_1 = \begin{bmatrix}
1 & 0 & 0 & 0 & 0 & 0 \\
0 & \cos\theta & -\sin\theta & 0 & 0 & 0 \\
0 & \sin\theta & \cos\theta & 0 & 0 & 0 \\
0 & 0 & 0 & 1 & 0 & 0 \\
0 & 0 & 0 & 0 & \cos\theta & -\sin\theta \\
0 & 0 & 0 & 0 & \sin\theta & \cos\theta
\end{bmatrix}
$$

Meanwhile, a coordinate transformation (transfer equation) for converting a state quantity from the local coordinate systems to the global coordinate systems is expressed by equation (7) below.

$$
\begin{bmatrix} q \\ Q \\ 1 \end{bmatrix}_i = \begin{bmatrix} g_2 & 0 & 0 \\ 0 & g_2 & 0 \\ 0 & 0 & 1 \end{bmatrix} \begin{bmatrix} q' \\ Q' \\ 1 \end{bmatrix}_i \qquad (7)
$$

where

$$g_2 = \begin{bmatrix} 1 & 0 & 0 & 0 & 0 & 0 \\ 0 & \cos\theta & \sin\theta & 0 & 0 & 0 \\ 0 & -\sin\theta & \cos\theta & 0 & 0 & 0 \\ 0 & 0 & 0 & 1 & 0 & 0 \\ 0 & 0 & 0 & 0 & \cos\theta & \sin\theta \\ 0 & 0 & 0 & 0 & -\sin\theta & \cos\theta \end{bmatrix}$$

For example, a coordinate transformation (transfer equation) from the journal to the crank arm is expressed by equation (8) below.

$$\begin{bmatrix} q' \\ Q' \\ 1 \end{bmatrix}_{arm} = \begin{bmatrix} g_3 & 0 & 0 \\ 0 & g_3 & 0 \\ 0 & 0 & 1 \end{bmatrix} \begin{bmatrix} q' \\ Q' \\ 1 \end{bmatrix}_{journal} \qquad (8)$$

where

$$g_3 = \begin{bmatrix} 0 & 0 & -1 & 0 & 0 & 0 \\ 0 & 1 & 0 & 0 & 0 & 0 \\ 1 & 0 & 0 & 0 & 0 & 0 \\ 0 & 0 & 0 & 0 & 0 & -1 \\ 0 & 0 & 0 & 0 & 1 & 0 \\ 0 & 0 & 0 & 1 & 0 & 0 \end{bmatrix}$$

Further, equation (8) is also used for coordinate transformation from the crank arm to the journal.. Moreover, a coordinate transformation (transfer equation) from the crank pin to the crank arm is expressed by equation (9) below, and a coordinate transformation from the crank arm to the crank pin is also expressed by equation (9) below.

$$\begin{bmatrix} q' \\ Q' \\ 1 \end{bmatrix}_{pin} = \begin{bmatrix} g_4 & 0 & 0 \\ 0 & g_4 & 0 \\ 0 & 0 & 1 \end{bmatrix} \begin{bmatrix} q' \\ Q' \\ 1 \end{bmatrix}_{arm} \qquad (9)$$

where

$$g_4 = \begin{bmatrix} 0 & 0 & 1 & 0 & 0 & 0 \\ 0 & 1 & 0 & 0 & 0 & 0 \\ -1 & 0 & 0 & 0 & 0 & 0 \\ 0 & 0 & 0 & 0 & 0 & 1 \\ 0 & 0 & 0 & 0 & 1 & 0 \\ 0 & 0 & 0 & -1 & 0 & 0 \end{bmatrix}$$

Incidentally, the panel transfer equation for the bearings 3 is expressed by equation (10) below.

$$\begin{bmatrix} q \\ Q \\ 1 \end{bmatrix}_{i+1}^{F} = \begin{bmatrix} 1 & 0 & 0 \\ h_1 & 1 & h_2 \\ 0 & 0 & 1 \end{bmatrix}_i \begin{bmatrix} q \\ Q \\ 1 \end{bmatrix}_i^{A} \qquad (10)$$

where

$$h_1 = \begin{bmatrix} 0 & 0 & 0 & 0 & 0 & 0 \\ 0 & 0 & 0 & 0 & 0 & 0 \\ 0 & 0 & 0 & 0 & 0 & 0 \\ 0 & 0 & 0 & 0 & 0 & 0 \\ 0 & -k_y & 0 & 0 & 0 & 0 \\ 0 & 0 & -k_z & 0 & 0 & 0 \end{bmatrix}$$

$$h_2 = \begin{bmatrix} 0 & 0 & 0 & 0 & k_y d_{y0} & k_z d_{z0} \end{bmatrix}^T$$

Data of an initial temporary installation height is substituted into $d_{z0}$ of $h_2$ ($d_{y0}$ is constant), and data with another installation height produced and changed by a genetic algorithm is inputted to $d_{z0}$ (the subscript "0" of d indicates an initial value).

The following will discuss the steps of calculating crankshaft deflection.

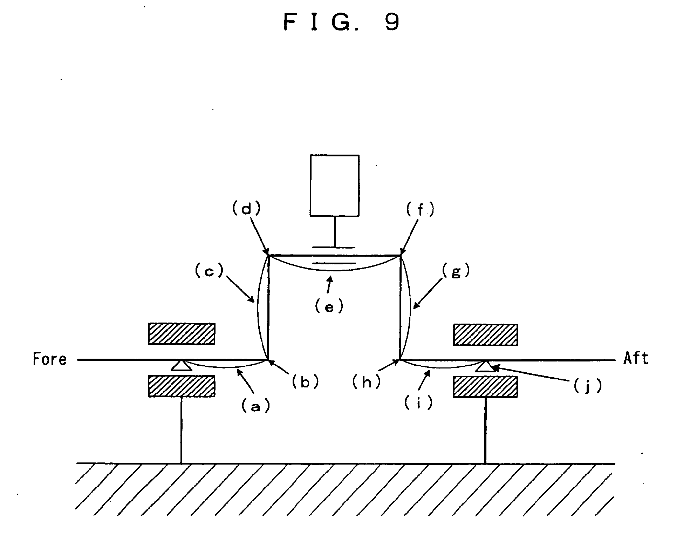

Here, assuming that $d_{x1}$, $d_{y1}$, and $d_{z1}$ are used as displacements on the side of the fore on the crank throw, $d_{x2}$, $d_{y2}$, and $d_{z2}$ are used as displacements on the side of the aft of the crank throw, and a represents an initial length of the crank throw, a distance D between the adjacent crank throws is expressed by equation (11) below (where the subscript 1 of d indicates (b) position of FIG. 9, which will be discussed later, and the subscript 2 indicates (h) position of FIG. 9).

$$D = \sqrt{(a + d_{x2} - d_{x1})^2 + (d_{y2} - d_{y1})^2 + (d_{z2} - d_{z1})^2} \qquad (11)$$

Moreover, assuming that a distance on the top dead center (TDC, 0°) of the piston is $D_0$ and a distance on the bottom dead center (BDC, 180°) of the piston is $D_{180}$, crankshaft deflection (Def) is expressed by equation (12) below.

$$Def = D_0 - D_{180} \qquad (12)$$

Incidentally, the order of a is $10^2$ mm and $d_x$, $d_y$, and $d_z$ are $10^{-3}$ mm. Thus, the above equation (11) can be transformed into equation (13) below.

$$D - a = \frac{2a(d_{x2} - d_{x1})}{D + a} + \frac{(d_{x2} - d_{x1})^2 + (d_{y2} - d_{y1})^2 + (d_{z2} - d_{z1})^2}{D + a}$$
$$= d_{x2} - d_{x1} \qquad (13)$$

where

$$D + a = 2a$$

$$\frac{(d_{x2} - d_{x1})^2 + (d_{y2} - d_{y1})^2 + (d_{z2} - d_{z1})^2}{D + a} \ll d_{x2} - d_{x1}$$

Therefore, crankshaft deflection can be calculated by equation (14) below.

$$Def = (d_{x2'} - d_{x1})_0 - (d_{x2} - d_{x1})_{180} \qquad (14)$$

As shown in equation (14), crankshaft deflection mostly depends upon a deformation amount in the crankshaft core direction.

Referring to FIG. 9, the following will discuss the specific steps of calculating crankshaft deflection in accordance with the above arithmetic equations.

Here, the calculating steps of the members will be discussed in order while attention is focused on one crank throw.

First step: the field transfer matrix equation of equation (5) is used for a bearing (a).

Second step: for a bent part (b), the left side of equation (5) in the first step is substituted into the right side of the coordinate transformation of equation (6), and the left side of equation (6) at this moment is substituted into the right side (journal) of the coordinate transformation of equation (8).

Third step: for a crank arm (c), the left side of equation (8) in the second step is substituted into the right side of equation (5).

Fourth step: for a bent part (d), the left side of equation (5) in the third step is substituted into the right side of the coordinate transformation of equation (9).

Fifth step: for a crank pin (e), the left side of equation (9) in the fourth step is substituted into the right side of equation (5).

Six step: for a bent part (f), the left side of equation (5) in the fifth step is used as the left side of equation (9).

Seventh step: for a crank arm (g), the right side $[q'Q'1]\, T_{arm}$ of equation (9) in the sixth step is substituted into equation (5).

Eighth step: for a bent part (h), the left side of equation (5) in the seventh step is used as the left side of equation (8), and the right side $[q'Q'1]^T_{journal}$ of equation (8) at this moment is substituted into the right side of the coordinate transformation of equation (7).

Ninth step: for a bearing (i), the left side of equation (7) in the eighth step is substituted into the right side of equation (5).

Further, for transfer from a crank throw 1 to an adjacent crank throw 2 (a supporting point on (j) serves as a boundary), the point transfer matrix equation of equation (10) is used and the transfer is performed by substituting the left side of equation (5) in the ninth step into the right side of equation (10).

In this way, state quantities q and Q (Q=0) are transferred from the fore to the aft by the transfer matrixes which are coefficients of the transfer equations, so that displacements are calculated. Certainly, in the process of the transfer, Q is also changed by $f_1$, $f_2$, $h_1$, and $h_2$ of equation (5) and equation (10).

The following will discuss the evaluation value calculating means 44.

As shown in equation (15), the evaluation value calculating means 44 is provided for calculating an evaluation value H for deciding whether a calculated deflection value is proper or not based on a measured deflection value.

$$H = \sum_{i=1}^{n} \frac{n}{|Def_{mesured}(i) - Def(i)|} \qquad (15)$$

Additionally, in equation (15), n represents the total number of pistons.

Moreover, the deciding means 45 compares an evaluation value and a predetermined permissible value. When the evaluation value exceeds the permissible value in any one of 46 sets of installation height data strings, regarding a data string of temporary installation heights in the set, a calculated deflection value and a measured deflection value are substantially equal to each other. Therefore, it is decided that temporarily set values of temporary installation height data are substantially correct, and the decision is outputted to a display device. Additionally, it is possible to output all the data strings having temporary installation heights with evaluation values exceeding the permissible value or output only a data string with the largest evaluation value. Meanwhile, when the evaluation values are equal to or lower than the permissible value in all the 46 sets having data strings of temporary installation heights, all the calculated deflection values are different from measured deflection values. This indicates that initially set values are improper in the data string of temporary installation heights, and the decision is inputted to the installation height changing means 46.

In the installation height changing means 46, a genetic operation, that is, a genetic algorithm is performed on all the data strings of the initially set installation heights, so that another data string is produced with a new temporary installation height. To be specific, $d_{z0}$ of $h_2$ in equation (10) is changed. Certainly, as described above, the installation height is converted into a binary code.

In this case, the following algorithms are used as a genetic algorithm: selection which erases, for example, a data string having a low evaluation value from 46 sets of data strings and increases data strings having high evaluation values, crossing-over which recombines some data strings, and mutation which reverses a bit on an arbitrary position of a data string.

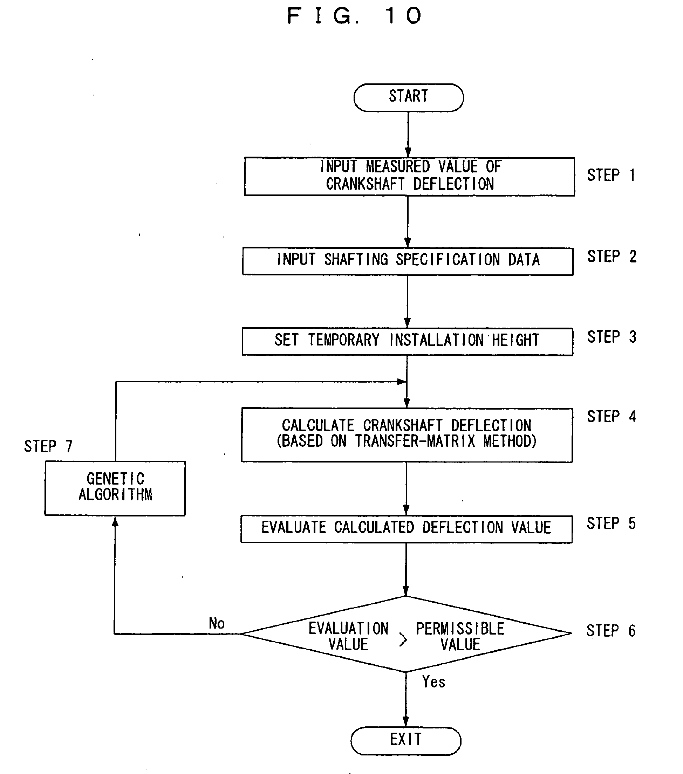

Referring to a schematic flow of FIG. 10, the following will discuss the steps of detecting an installation height of the crankshaft by using the above-described steps of calculating crankshaft deflection. Additionally, these steps are similar to the contents of a computer program (described later) for detecting an installation height in the present invention.

First, as shown in step 1, the crankshaft deflection measuring device 21 measures crankshaft deflection at a prescribed crank angle position on each crank throw and inputs a measured deflection value.

Subsequently, as shown in step 2, the shafting specification data input means 41 inputs the number of cylinders required for computation, a stroke, a mass of a crank throw, moment of inertia, and the dimensions of the journal, the crank pin, the crank arm and so on.

Subsequently, as shown in step 3, the temporary installation height setting means 42 sets, for example, 46 sets of data strings of temporary installation heights as initial values of the bearings 3.

Subsequently, as shown in step 4, the crankshaft deflection calculating means 43 calculates displacements ($d_{x1}$, $d_{y1}$, and $d_{z1}$) (position (b) of FIG. 9) on the side of the fore and displacements ($d_{x2}$, $d_{y2}$, and $d_{z2}$) (position (h) of FIG. 9) on the side of the aft for each crank throw using a transfer-matrix method. And then, crankshaft deflection is calculated by computation using equation (11) and equation (12).

Subsequently, as shown in step 5, the evaluation value calculating means 44 calculates an evaluation value based on a difference between the calculated deflection value and the measured deflection value. And then, in step 6, the evaluation value is compared with a predetermined permissible value and it is decided whether the calculated deflection value is proper or not. Namely, when the evaluation value exceeds the permissible value, it is decided that the installation height is proper, the installation height being set as a temporary set height of the bearing 3 on each crank throw, and the installation height is outputted as a current installation height.

The above-described steps are performed on all of the 46 sets of installation height data strings. When an evaluation value exceeds the permissible value (within a permissible range), the outputting step completes the detection.

Meanwhile, when evaluation values are equal to or lower than the permissible value in all of the sets of installation height data strings, as shown in step 7, the installation height changing means 46 performs an operation of the genetic algorithm on data strings having temporary installation heights as initial values to produce 46 sets of data strings having new temporary installation height.

Then, step 4 is performed again. After crankshaft deflection is calculated, evaluation is performed using an evaluation expression. When an evaluation value exceeds the permissible value in the 46 sets of data strings, it is decided that the data string having the temporary installation height is a current installation height, and the data string is outputted.

Further, when evaluation values of all of the 46 sets of data strings are equal to or lower than the permissible value, step 7 is performed. In the installation height changing means 46, a data string having a current temporary installation height is changed by the genetic algorithm again to produce 46 sets of data strings having new temporary installation heights. Then, the same steps are repeated and continued until an evaluation value exceeds the permissible value (enters the permissible range).

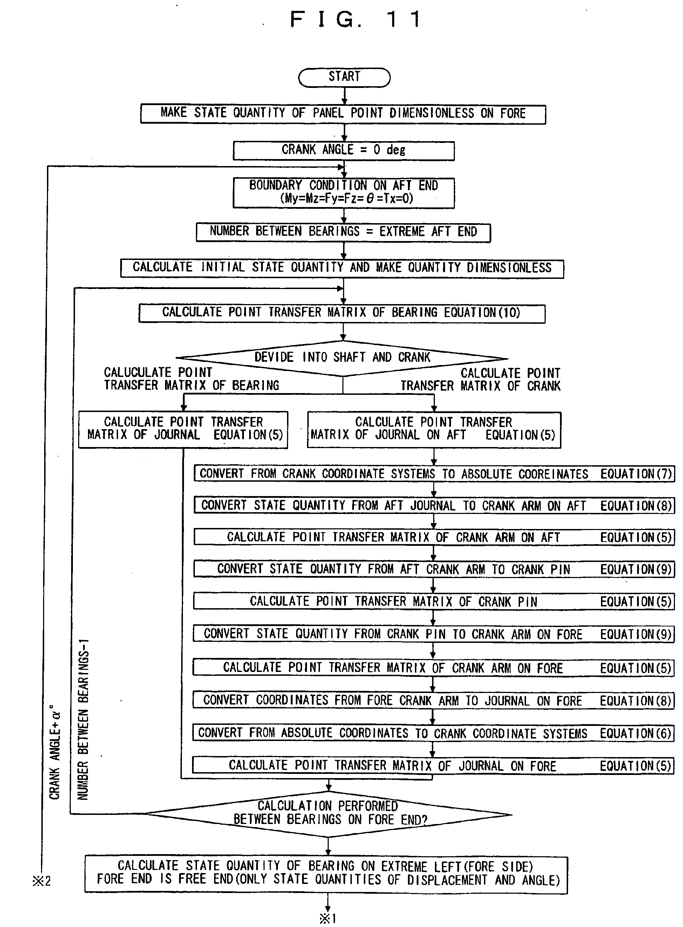

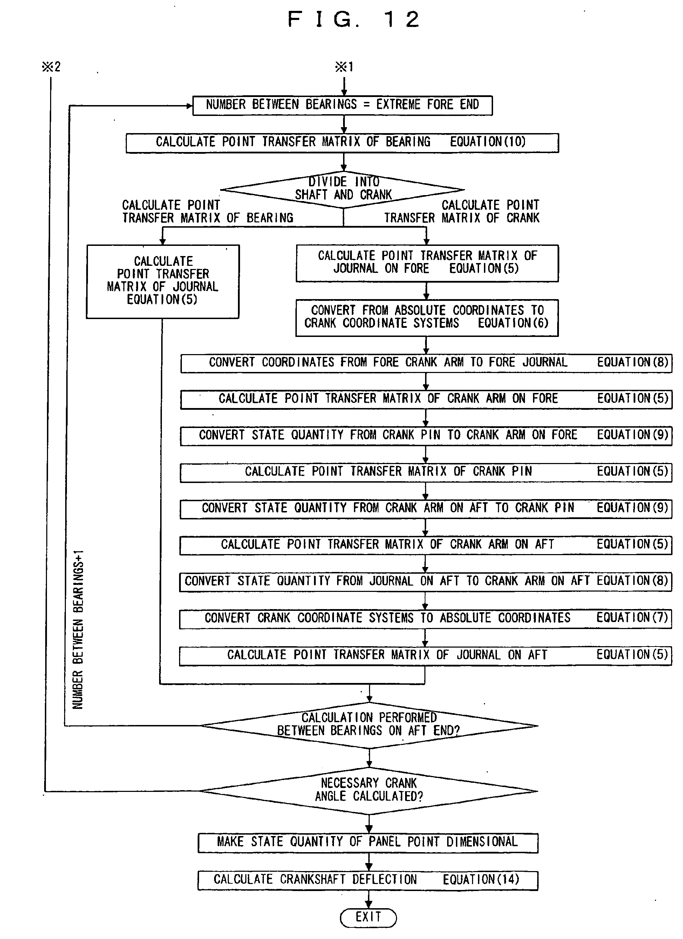

For reference, the detail of the calculating steps is shown in FIGS. 11 and 12.

FIGS. 11 and 12 show flows connected to each other at *1 and *2. The first half of FIG. 11 shows the steps of calculating a state quantity on the side of the fore, and the second half of FIG. 12 shows the steps of calculating displacement on each-crank throw based on the state quantity obtained in the first half. Then, all the calculating steps are repeated for each prescribed crank angle (+α).

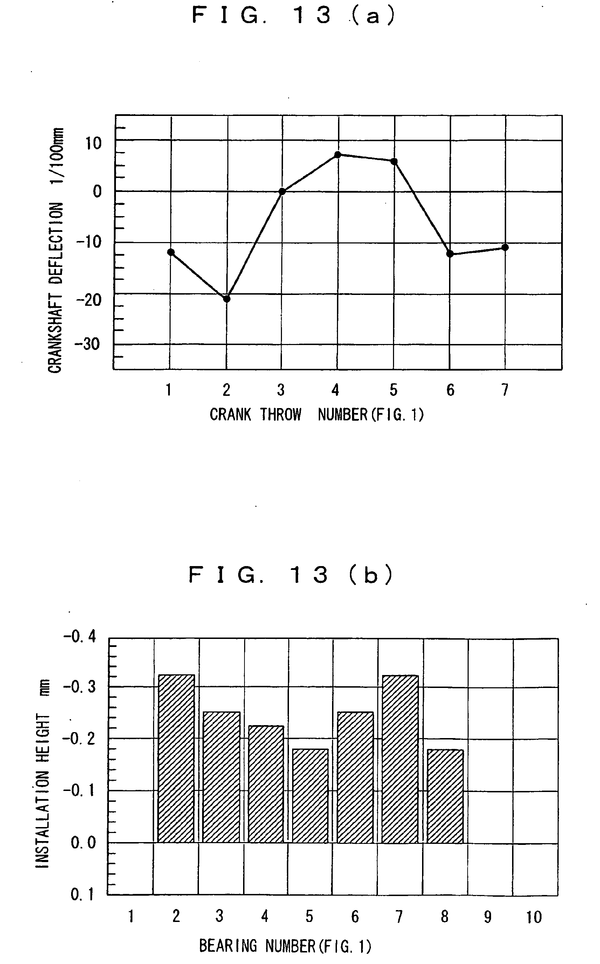

Besides, FIG. 13 shows data in comparison with calculated deflection values when measured deflection values and installation heights are estimated. FIG. 13(a) shows comparison with deflection values. Both of the calculated values and the measured values are substantially equal to each other. Thus, a single line is drawn on the graph. Moreover, FIG. 13(b) shows set (estimated) installation heights.

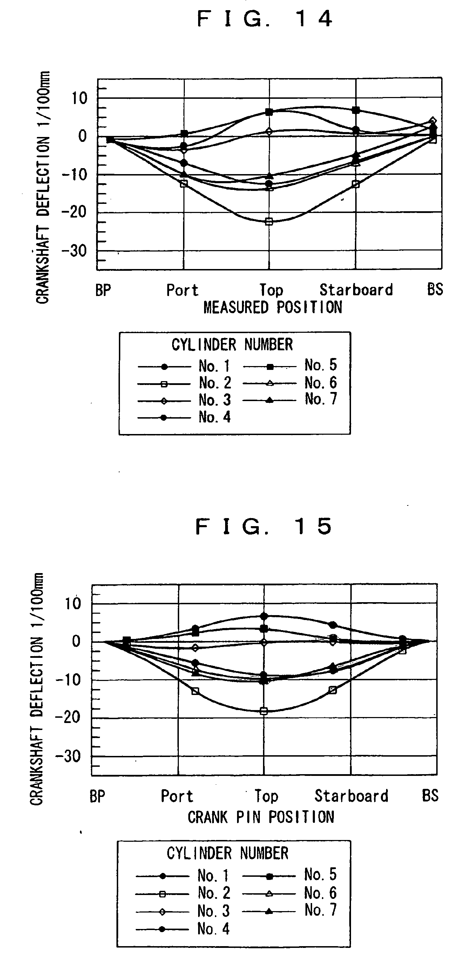

Additionally, in the installation height detector, since crankshaft deflection is calculated during one rotation of the crankshaft, a horizontal installing state is calculated in addition to an installation height in a perpendicular direction. FIG. 14 shows measurement results of crankshaft deflection during one rotation on each crank throw, and FIG. 15 shows calculated deflection values of FIG. 14.

As described above, when an installation height of the crankshaft is detected, the installation height of each bearing is temporarily set as initial data in advance, crankshaft deflection on each crank throw is calculated based on the temporary installation height by using the transfer-matrix method, an evaluation value is calculated based on a difference between the calculated deflection value and an actually measured deflection value, and it is decided that the temporary installation height is proper when the evaluation value is within the permissible range. Meanwhile, when the evaluation value is out of the permissible range, the genetic algorithm is performed on the temporary installation height to produce another temporary installation height, and a deflection value is calculated again. These steps are repeated. Hence, as compared with the conventional art depending upon experience of an operator, it is possible to quickly detect an installation position of the crankshaft with accuracy.

The above embodiment discussed detection of the installation height of the crankshaft. The installation horizontal position of the crankshaft can:be also detected using the same device and method.

Namely, in the installation height detector and the detecting method, when the steps are performed after the phrase "installation height" is replaced with "installation horizontal position", it is possible to quickly detect an installation horizontal position of the crankshaft with accuracy.

However, crankshaft deflection is calculated by equation (16) below. As to a data string produced by the genetic algorithm, $d_{y0}$ of $h_2$ in equation (10) is changed ($d_{z0}$ is constant).

$$\text{Def} = (d_{x2} - d_{x1})_{90} - (d_{x2} - d_{x1})_{270} \qquad (16)$$

For understanding, the detector and the detecting method were described separately for an installation height and an installation horizontal position. Certainly, a state quantity, the field transfer matrix, and the point transfer matrix that are necessary for computation include displacements on three-dimensional coordinate axes capable of calculating an installation height and an installation horizontal position. Hence, an installation height and an installation horizontal position can be detected simultaneously by using the same detector and detecting method. As a phrase including an installation height and an installation horizontal position, an installation position is used.

Further, the above embodiment discussed the provision of the crankshaft deflection measuring device for actually measuring crankshaft deflection on each crank throw. Such a crankshaft deflection measuring device is not always necessary. In short, it is necessary to input an actually measured value of crankshaft deflection to the installation height arithmetical unit or an installation horizontal position arithmetical unit.

Furthermore, the installation height arithmetical unit or the installation horizontal position arithmetical unit of the present embodiment is provided with a program for calculating (detecting) an accurate installation height of the crankshaft and an installation horizontal position of the crankshaft by using a computer device.

For example, the program for calculating (detecting) the installation height of the crankshaft comprises a specification data inputting step of inputting the specification data of the crankshaft 2 to an arithmetical unit, a measured value inputting step of inputting a measured value of crankshaft deflection serving as a displacement amount between the crank arms, the displacement amount being actually measured on crank throws corresponding to pistons, a temporary installation height setting step of temporarily setting one or more sets of installation height data strings (pieces of installation height data on the bearings are arranged in series) of the bearings other than the reference bearing of the crankshaft at the reference installation height, a deflection calculating step of calculating crankshaft deflection on each crank throw based on the data string having the temporary installation height by using the transfer-matrix method, an evaluation value calculating step of calculating an evaluation value based on a difference between a calculated deflection value obtained in the deflection calculating step and a measured deflection value inputted in the measured value inputting step, a deciding step of deciding whether an evaluation value calculated in the evaluation value calculating step is within the permissible range or not, an installation height changing step of performing an operation of the genetic algorithm on all of the sets of data strings having the temporary installation heights to produce another data string having a new temporary installation height when the deciding step decides that the evaluation values in the sets of data strings having the temporary installation heights are all out of the permissible range, and a command step of causing the deflection calculating step to calculate crankshaft deflection based on the newly produced data string and repeating the step of producing the data string having the temporary installation height by using the genetic algorithm in the installation height changing step until a set of evaluation values comes within the permissible range, the evaluation values being obtained based on a difference between the calculated deflection value and the measured deflection value on each crank throw. Besides, for the application of the genetic algorithm, the program comprises (not shown) a coding step of converting an installation height data string into a binary code and a decoding step of returning the installation height data string, which has been converted into a binary code, to decimal numbers (conversion to a binary code).

Further, the program for calculating (detecting) the installation horizontal position of the crankshaft comprises a specification data inputting step of inputting the specification data of the crankshaft 2 to the arithmetical unit, a measured value inputting step of inputting a measured value of crankshaft deflection serving as a displacement amount between the crank arms, the displacement amount being actually measured on crank throws corresponding to pistons, a temporary installation horizontal position setting step of temporarily setting one or more sets of data strings of the installation horizontal positions of the bearings (pieces of installation horizontal position data on the bearings are arranged in series) other than the reference bearing of the crankshaft at the reference installation horizontal position, a deflection calculating step of calculating crankshaft deflection on each crank throw by using the transfer-matrix method based on the data string of the temporary installation horizontal position set in the temporary installation horizontal position setting step, an evaluation value calculating step of calculating an evaluation value based on a difference between a calculated deflection value obtained in the deflection calculating step and a measured deflection value inputted in the measured value inputting step, a deciding step of deciding whether an evaluation value calculated in the evaluation value calculating step is within the permissible range or not, a installation horizontal position changing step of performing an operation of the genetic algorithm on all of the sets of data strings of the temporary installation horizontal positions to produce a data string of a new temporary installation horizontal position when the deciding step decides that the evaluation values in the sets of data strings of the temporary installation horizontal positions are all out of the permissible range, and a command step of causing the deflection calculating step to calculate crankshaft deflection based on the newly produced data string of installation horizontal positions and repeating the step of producing the data string of the temporary installation horizontal position by using the genetic algorithm in the installation horizontal position changing step until evaluation values in a set of data strings having temporary installation horizontal positions come within the permissible range, the evaluation values being obtained based on a difference between the calculated deflection value and the measured deflection value on each crank throw. Certainly, for the application of the genetic algorithm, the program comprises (not shown) a coding step of converting a data string of the installation horizontal positions into a binary code and a decoding step of returning the data string of the installation horizontal positions to decimal numbers (conversion to a binary code), the data string having been converted into a binary code.

Additionally, each of the means (e.g., the temporary installation height setting means, the crankshaft deflection calculating means, the evaluation value calculating means, the deciding means, the installation height changing means, and so on other than the input means) is constituted by, for example, a general-purpose arithmetic circuit and programs for performing the steps performed in the means or circuits for performing the steps (functions) in the means. Certainly, the installation horizontal position arithmetical unit has the same configuration.

According to the method of detecting an installation position of the crankshaft, the detector, and the programs for detecting the position, when the installation position (installation height or/and installation horizontal position) of the crankshaft is detected, the installation positions of the bearings are temporarily set as initial data in advance, crankshaft deflection on each crank throw is calculated based on the temporary installation positions by using the transfer-matrix method, an evaluation value is calculated based on a difference between the calculated deflection value and a measured deflection value, and the evaluation value and the permissible value are compared with each other. When the evaluation value is within the permissible range, it is decided that the temporary installation position is proper. Meanwhile, when the evaluation value is out of the permissible range, the genetic algorithm is performed on the temporary installation position to set a new installation position, a deflection value is calculated again, and the evaluation value and the permissible range are compared with each other. These steps are repeated until an evaluation value enters the permissible range. Thus, as compared with the conventional art depending upon experience of an operator, it is possible to quickly detect an installation position of the crankshaft with accuracy.

Incidentally, the installation position detection of the crankshaft and the installation position detector of the above embodiment are used to measure the installation heights of the bearings in the crankshaft, for example, when a ship is unloaded and loaded. Hence, it is possible to detect deformation on a hull. Therefore, when another ship is built next time, in view of the deformation, that is, deformation can be previously added in an opposite direction so as to extend the crankshaft substantially in a straight line in a state in which the ship is loaded.

Industrial Applicability

As described above, a method of detecting an installation position of a crankshaft according to the present invention is suitable for operations of installing an engine in a hull because of quickly detecting an installation position of the crankshaft with accuracy.

**Claims**

1. A method of detecting an installation position of a crankshaft in an engine having a plurality of pistons arranged in series,
   wherein the method comprises:

   a step of inputting a measured value of crankshaft deflection serving as a displacement amount between crank arms, the displacement amount being actually measured on crank throws corresponding to pistons,
   a step of setting temporarily installation positions of bearings other than a reference bearing, as data, based on a reference installation position of the reference bearing on the crankshaft,
   a step of calculating crankshaft deflection on each crank throw by using transfer-matrix method based on the temporary installation position set in the setting step,
   a step of deciding whether an evaluation value is within a permissible range or not after the evaluation value is calculated based on a difference between a calculated deflection value obtained in the calculating step and the measured deflection value, and
   a step of producing another temporary installation position based on the genetic algorithm when the deciding step decides that the evaluation value is out of a permissible range,
   wherein crankshaft deflection is calculated based on the newly produced temporary installation position to repeat the step of producing a temporary installation position based on the genetic algorithm until an evaluation value comes within the permissible range, the evaluation value being obtained based on a difference between a calculated deflection value and the measured deflection value on each crank throw, and a temporary installation position at a point of time when an evaluation value comes within the permissible range is detected as an installation position of the crankshaft.

2. The method of detecting an installation position of a crankshaft according to claim 1, wherein the installation position is a height position and/or a horizontal position.

3. A detector for detecting an installation position of a crankshaft in an engine having a plurality of pistons arranged in series,
   wherein the detector comprises:

   temporary installation position setting means for temporarily setting installation positions of bearings as data;
   crankshaft deflection calculating means for calculating crankshaft deflection serving as a displacement amount between crank arms on each crank throw by using transfer-matrix method based on the temporary installation position set by the temporary installation position setting means;
   evaluation value calculating means for calculating an evaluation value based on a difference between a calculated deflection value obtained by the crankshaft deflection calculating means and a measured deflection value measured by crankshaft deflection measuring means;
   deciding means for deciding whether an evaluation value calculated by the evaluation value calculating means is within a permissible range or not and deciding that the temporary installation position is an installation position of the crankshaft when the evaluation value is within the permissible range; and
   installation position changing means for performing a genetic algorithm on the temporary installation position to produce another temporary installation position when the deciding means decides that the evaluation value is out of the permissible range,
   wherein a deflection value is calculated by using the new temporary installation position when a new temporary installation position is produced by the installation position changing means, and the step of producing a temporary installation position based on the generic algorithm is repeated until an evaluation value comes, within the permissible range, the evaluation value being obtained based on a difference between the calculated deflection value and the measured deflection value.

4. The detector for detecting an installation position of a crankshaft according to claim 3, wherein the installation position is a height position and/or a horizontal position.

5. A program for causing a computer device to compute and detect an installation position of a crankshaft in an engine having a plurality of pistons arranged in series based on a displacement amount (hereinafter, referred to as crankshaft deflection) between crank arms,
   wherein the program comprises:

an inputting step of inputting a measured value of crankshaft deflection actually measured on crank throws corresponding to pistons,

a setting step of temporarily setting installation positions as data regarding bearings other than a reference bearing of the crankshaft at a reference installation position,

a calculating step of calculating crankshaft deflection on each crank throw by using the transfer-matrix method based on the temporary installation position set in the setting step,

a deciding step of deciding whether an evaluation value is within a permissible range or not after the evaluation value is calculated based on a difference between a calculated deflection value obtained in the calculating step and the measured and inputted deflection value,

an installation position changing step of producing a new temporary installation position based on a genetic algorithm when the deciding step decides that the evaluation value is out of the permissible range, and

a command step of causing the calculating step to calculate crankshaft deflection based on the newly produced temporary installation position and repeating the step of producing a temporary installation position based on the genetic algorithm in the installation position changing step until an evaluation value comes within the permissible range, the evaluation value being obtained based on a difference between the calculated deflection value and the measured deflection value on each crank throw.

6. The program for detecting an installation position of a crankshaft according to claim 5, wherein the installation position is a height position and/or a horizontal position.

**Patentansprüche**

1. Verfahren zum Feststellen der Einbauposition einer Kurbelwelle in einer Maschine, welche mehrere in Reihe angeordnete Kolben aufweist,
   wobei das Verfahren umfasst:

   die Eingabe eines gemessenen Wertes der Kurbelwellendurchbiegung, wozu ein Versatzbetrag zwischen Kurbelwangen dient und wobei der tatsächliche Versatzbetrag an den den Kolben zugeordneten Kurbelwellenkröpfungen gemessen wird,
   eine temporäre, von einem Referenzlager abweichende Einstellung von Lagereinbaupositionen in Form von Daten, basierend auf einer Referenzeinbauposition des Referenzlagers an der Kurbelwelle,
   eine Berechnung der Kurbelwellendurchbiegung an jeder Kurbelwellenkröpfung durch Einsatz der Übergangsmatrixmethode, basierend auf der in dem Einstellschritt eingestellten, temporären Einbauposition,
   eine Entscheidung, ob ein Auswertebetrag innerhalb oder nicht innerhalb des zulässigen Bereiches liegt, nachdem der Auswertebetrag auf Basis einer Differenz zwischen einem in dem Berechnungsschritt berechneten Durchbiegungswert und dem gemessenen Durchbiegungswert berechnet ist, und
   die Erzeugung einer weiteren temporären Einbauposition auf Basis des genetischen Algorithmus, wenn sich im Entscheidungsschritt ergibt, dass der Auswertebetrag außerhalb des zulässigen Bereiches liegt,
   wobei die Kurbelwellendurchbiegung auf Basis einer neuerlich erzeugten temporären Einbauposition berechnet wird, um den Schritt zur Erzeugung einer temporären Einbauposition auf Basis des genetischen Algorithmus zu wiederholen, bis der Auswertebetrag, welcher auf Basis einer Differenz zwischen einem errechneten Durchbiegungswert und dem gemessenen Durchbiegungswert an jeder Kurbelwellenkröpfung gewonnen wird, in den zulässigen Bereich gelangt, und eine temporäre Einbauposition als Einbauposition der Kurbelwelle zu dem Zeitpunkt ermittelt ist, wenn ein Auswertebetrag in den zulässigen Bereich gelangt.

2. Verfahren zum Feststellen der Einbauposition einer Kurbelwelle gemäß Anspruch 1, wobei die Einbauposition eine Höhenposition und/oder eine horizontale Position ist.

3. Detektor zum Feststellen der Einbauposition einer Kurbelwelle in einer Maschine, welche mehrere in Reihe angeordnete Kolben aufweist,
   wobei der Detektor umfasst:

   eine Einstelleinrichtung für temporäre Einbaupositionen zum temporären Einstellen von Lagereinbaupositionen in Form von Daten;
   eine Berechnungseinrichtung für Kurbelwellendurchbiegungen zur Berechnung einer Kurbelwellendurchbiegung, wozu ein Versatzbetrag zwischen Kurbelwangen an jeder Kurbelwellenkröpfung dient, durch Einsatz der Transfermatrixmethode, basierend auf der temporären Einbauposition die durch Einstelleinrichtung für temporäre Einbaupositionen eingestellt wurde;

eine Berechnungseinrichtung für einen Auswertebetrag zur Berechnung eines Auswertebetrages auf Basis einer Differenz zwischen einem durch die Berechnungseinrichtung für Kurbelwellendurchbiegungen berechneten Durchbiegungswert und einem durch eine Messeinrichtung für Kurbelwellendurchbiegungen gemessenen Durchbiegungswert;

eine Entscheidungseinrichtung zur Entscheidung, ob ein durch die Berechnungseinrichtung für einen Auswertebetrag berechneter Auswertebetrag innerhalb oder nicht innerhalb eines zulässigen Bereiches liegt und entscheidet, dass die temporäre Einbauposition eine Einbauposition der Kurbelwelle ist, wenn die auszuwertende Größe innerhalb des zulässigen Bereiches liegt; und

eine Wechseleinrichtung für Einbaupositionen zur Ausführung eines genetischen Algorithmus auf der temporären Einbauposition, um eine weitere temporäre Einbauposition zu erzeugen, wenn die Entscheidungseinrichtung entscheidet, dass der Auswertebetrag außerhalb des zulässigen Bereiches liegt,

wobei durch Einsatz der neuen temporären Einbauposition ein Durchbiegungswert berechnet wird, wenn eine neue temporäre Einbauposition durch die Wechseleinrichtung für Einbaupositionen erzeugt wird, und wobei die Erzeugung einer temporären Einbauposition auf Basis des genetischen Algorithmus wiederholt wird, bis ein Auswertebetrag in den zulässigen Bereich gelangt, wobei der Auswertebetrag auf Basis einer Differenz zwischen dem berechneten Durchbiegungswert und dem gemessenen Durchbiegungswert erlangt wird.

4. Detektor zur Feststellung einer Einbauposition einer Kurbelwelle nach Anspruch 3, wobei die Einstellposition eine Höhenposition und/oder eine horizontale Position ist.

5. Programm für einen Computer zum Berechnung und Feststellung einer Einbauposition einer Kurbelwelle in einer Maschine, welche mehrere in Reihe angeordnete Kolben aufweist, basierend auf einem Versatzbetrag (im folgenden als Kurbelwellendurchbiegung bezeichnet) zwischen Kurbelwangen,

wobei das Programm umfasst:

einen Eingabeschritt mit Eingabe eines gemessenen Wertes der Kurbelwellenddurchbiegung, welcher an den den Kolben zugeordneten Kubelwellenkröpfungen tatsächlich gemessen wurde,

einen Einstellschritt zur temporären Einstellung von Einbaupositionen in Form von Daten in Bezug auf Lagern, abweichend von dem Referenzlager der Kurbelwelle in der Referenzeinbauposition,

ein Berechnungsschritt zum Berechnen der Kurbelwellendurchbiegung an jeder Kurbelwellenkröpfung durch Einsatz der Transfermatrixmethode, basierend auf der im Einstellschritt eingestellten temporären Einbauposition,

einen Entscheidungsschritt zur Entscheidung, ob ein Auswertebetrag innerhalb des zulässigen Bereiches liegt oder nicht, nachdem der Auswertebetrag basierend auf einer Differenz zwischen einem im Berechnungsschritt berechneten Durchbiegungswert und dem gemessenen und eingegebenen Durchbiegungswert berechnet wurde,

einen Einbaupositionswechselschritt zur Erzeugung einer neuen temporären Einbauposition, basierend auf einem genetischen Algorithmus, wenn im Entscheidungsschritt entschieden wird, dass der Auswertebetrag außerhalb des zulässigen Bereiches liegt, und

einen Orderschritt der den Berechnungsschritt veranlasst, die Kurbelwellendurchbiegung auf Basis einer neu erzeugten temporären Einbauposition zu berechnen und der Wiederholung des Schrittes zur Erzeugung einer temporären Einbauposition, basierend auf dem genetischen Algorithmus in dem Einbaupositionswechselschritt, bis der Auswertebetrag in den zulässigen Bereich gelangt, wobei der erhaltene Auswertebetrag auf einer Differenz zwischen dem berechneten Kurbelwellendurchbiegungswert und dem gemessenen Kurbelwellendurchbiegungswert an jeder Kurbelwellenkröpfung basiert.

6. Programm zur Feststellung der Einbauposition einer Kurbelwelle gemäß Anspruch 5, wobei die Einbauposition eine Höhenposition und/oder eine horizontale Position ist.

## Revendications

1. Procédé de détection d'une position d'installation d'un vilebrequin dans un moteur ayant une pluralité de pistons installés en série,

dans lequel le procédé comprend les étapes consistant à :

entrer une valeur mesurée de déviation de vilebrequin servant de quantité de déplacement entre les bras de manivelle, la quantité de déplacement étant en fait mesurée sur des manivelles de vilebrequin correspondant à des pistons ;

désigner provisoirement des positions d'installation de paliers autres qu'un palier de référence, en tant que données, à partir d'une position d'installation de référence du palier de référence sur le vilebrequin ;

calculer la déviation de vilebrequin sur chaque manivelle de vilebrequin en utilisant la méthode de matrice de transfert à partir de la position d'installation provisoire désignée au cours de l'étape de désignation ;

décider si une valeur d'évaluation est comprise ou non dans une plage acceptable après que la valeur d'évaluation a été calculée à partir d'une différence entre une valeur de déviation calculée, obtenue au cours de l'étape de calcul, et la valeur de déviation mesurée, et

produire une autre position d'installation provisoire à partir de l'algorithme génétique, lorsque l'étape de décision décide que la valeur d'évaluation est en dehors d'une plage acceptable,

dans lequel une déviation de vilebrequin est calculée à partir de la position d'installation provisoire nouvellement produite pour répéter l'étape de production d'une position d'installation provisoire à partir de l'algorithme génétique jusqu'à ce qu'une valeur d'évaluation rentre dans la plage acceptable, la valeur d'évaluation étant obtenue à partir d'une différence entre une valeur de déviation calculée et la valeur de déviation mesurée sur chaque manivelle de vilebrequin, et une position d'installation provisoire au moment où une valeur d'évaluation rentre dans la plage acceptable est détectée en tant que position d'installation du vilebrequin.

2. Procédé de détection d'une position d'installation d'un vilebrequin selon la revendication 1, dans lequel la position d'installation est une position de hauteur et/ou une position horizontale.

3. Détecteur destiné à détecter une position d'installation d'un vilebrequin dans un moteur ayant une pluralité de pistons installés en série,

dans lequel le détecteur comprend :

des moyens de désignation de position d'installation provisoire destinés à désigner provisoirement des positions d'installation de paliers en tant que données ;

des moyens de calcul de déviation de vilebrequin destinés à calculer une déviation de vilebrequin servant de quantité de déplacement entre les brase de manivelle sur chaque manivelle de vilebrequin en utilisant la méthode de matrice de transfert à partir de la position d'installation provisoire désignée par les moyens de désignation de position d'installation provisoire ;

des moyens de calcul de valeur d'évaluation destinés à calculer une valeur d'évaluation à partir d'une différence entre une valeur de déviation calculée, obtenue par les moyens de calcul de déviation de vilebrequin, et une valeur de déviation mesurée, mesurée par les moyens de mesure de déviation de vilebrequin ;

des moyens de décision destinés à décider si une valeur d'évaluation calculée par les moyens de calcul de valeur d'évaluation est comprise ou non dans une plage acceptable, et à décider que la position d'installation provisoire est une position d'installation du vilebrequin lorsque la valeur d'évaluation est comprise dans la plage acceptable ; et

des moyens de modification de position d'installation destinés à exécuter un algorithme génétique sur la position d'installation provisoire afin de produire une autre position d'installation provisoire lorsque les moyens de décision décident que la valeur d'évaluation est hors de la plage acceptable,

dans lequel une valeur de déviation est calculée en utilisant la nouvelle position d'installation provisoire lorsqu'une nouvelle position d'installation provisoire est produite par les moyens de modification de position d'installation, et l'étape consistant à produire une position d'installation provisoire à partir de l'algorithme génétique est répétée jusqu'à ce qu'une valeur d'évaluation rentre dans la plage acceptable, la valeur d'évaluation étant obtenue à partir d'une différence entre la valeur de déviation calculée et la valeur de déviation mesurée.

4. Détecteur destiné à détecter une position d'installation d'un vilebrequin selon la revendication 3, dans lequel la position d'installation est une position de hauteur et/ou une position horizontale.

5. Programme destiné à entraîner un dispositif informatique à calculer et à détecter une position d'installation d'un vilebrequin dans un moteur ayant une pluralité de pistons disposés en série à partir d'une quantité de déplacement (dénommée ci-après déviation de vilebrequin) entre les bras de manivelle,

dans lequel le programme comprend:

une étape d'entrée, pour entrer une valeur mesurée de déviation de vilebrequin, mesurée réellement sur les manivelles de vilebrequin correspondant aux pistons,

une étape de désignation provisoirement, pour désigner des positions d'installation en tant que données con-

**EP 1 310 763 B1**

cernant des paliers autres qu'un palier de référence du vilebrequin dans une position d'installation de référence, une étape de calcule, pour calculer une déviation de vilebrequin sur chaque manivelle de vilebrequin en utilisant la méthode de matrice de transfert à partir de la position d'installation provisoire désignée au cours de l'étape de désignation,

une étape de décision, pour décider si une valeur d'évaluation est comprise ou non dans une plage acceptable, suite au calcul de la valeur d'évaluation à partir d'une différence entre une valeur de déviation calculée, obtenue au cours de l'étape de calcul, et la valeur de déviation mesurée et entrée,

une étape de modification de position d'installation, pour produire une nouvelle position d'installation provisoire à partir d'un algorithme génétique, lorsque l'étape de décision décide que la valeur d'évaluation est hors de la plage acceptable, et

une étape de commande, pour générer l'étape de calcul consistant à calculer une déviation de vilebrequin à partir de la position d'installation provisoire nouvellement produite, et répéter l'étape de production d'une position d'installation provisoire à partir de l'algorithme génétique dans l'étape de modification de position d'installation jusqu'à ce qu'une valeur d'évaluation rentre dans la plage acceptable, la valeur d'évaluation étant obtenue à partir d'une différence entre la valeur de déviation calculée et la valeur de déviation mesurée sur chaque manivelle de vilebrequin.

6. Programme de détection d'une position d'installation d'un vilebrequin selon la revendication 5, dans lequel la position d'installation est une position de hauteur et/ou une position horizontale.

# F I G. 1

Fore ... Aft

#1 #2 #3 #4 #5 #6 #7 #8 #9

# F I G. 2

22 (INSTALLATION HEIGHT ARITHMETICAL UNIT)

SHAFTING SPECIFICATION DATA INPUT MEANS — 41

TEMPORARY INSTALLATION HEIGHT SETTING MEANS — 42

21

CRANKSHAFT DEFLECTOIN MEASURING DEVICE

CRANKSHAFT DEFLECTION CALCULATING MEANS

43

46

INSTALLATION HEIGHT CHANGING MEANS

EVALUATION VALUE CALCULATING MEANS — 44

DECIDING MEANS

45

# F I G. 3

# F I G. 4

# FIG. 5

Top (0°)

(270°) Port — y ⊙ x — Starboard (90°)

z

BP          BS

Bottom
(180°)

# FIG. 6

Aft

x

y

z

Fore

# F I G. 7

F I G. 8

F (reciprocating weight)

$\gamma$

Top

$\theta$  $\theta$  Fr

Wr

y
Port

Wt

W

Starboard

Ft

F/cos $\gamma$

z
Bottom

W(throw weight)

# F I G. 9

# F I G. 1 0

```
                    ┌──────────┐
                    │  START   │
                    └────┬─────┘
                         │
                         ▼
        ┌────────────────────────────────────┐
        │    INPUT MEASURED VALUE OF          │   STEP 1
        │    CRANKSHAFT DEFLECTION            │
        └────────────────┬───────────────────┘
                         │
                         ▼
        ┌────────────────────────────────────┐
        │    INPUT SHAFTING SPECIFICATION DATA│   STEP 2
        └────────────────┬───────────────────┘
                         │
                         ▼
        ┌────────────────────────────────────┐
        │    SET TEMPORARY INSTALLATION HEIGHT│   STEP 3
        └────────────────┬───────────────────┘
                         │
                         ▼
        ┌────────────────────────────────────┐
        │   CALCULATE CRANKSHAFT DEFLECTION   │   STEP 4
        │   (BASED ON TRANSFER-MATRIX METHOD) │
        └────────────────┬───────────────────┘
                         │
                         ▼
        ┌────────────────────────────────────┐
        │  EVALUATE CALCULATED DEFLECTION VALUE│  STEP 5
        └────────────────┬───────────────────┘
```

STEP 7

GENETIC ALGORITHM

EVALUATION VALUE $>$ PERMISSIBLE VALUE    STEP 6

No

Yes

EXIT

# FIG. 11

```
                          ┌──────────────┐
                          │    START     │
                          └──────┬───────┘
                                 ↓
        ┌──────────────────────────────────────────────────────────┐
        │ MAKE STATE QUANTITY OF PANEL POINT DIMENSIONLESS ON FORE   │
        └──────────────────────────┬───────────────────────────────┘
                                    ↓
                    ┌──────────────────────────────┐
                    │     CRANK ANGLE = 0 deg        │
                    └───────────────┬──────────────┘
                                    ↓
                 ┌────────────────────────────────────┐
                 │  BOUNDARY CONDITION ON AFT END      │
                 │  (My=Mz=Fy=Fz= θ =Tx=0)             │
                 └──────────────────┬─────────────────┘
                                    ↓
              ┌──────────────────────────────────────────┐
              │ NUMBER BETWEEN BEARINGS = EXTREME AFT END │
              └──────────────────────┬───────────────────┘
                                     ↓
        ┌──────────────────────────────────────────────────────────────┐
        │ CALCULATE INITIAL STATE QUANTITY AND MAKE QUANTITY DIMENSIONLESS│
        └───────────────────────────────┬──────────────────────────────┘
                                         ↓
          ┌────────────────────────────────────────────────────────┐
          │ CALCULATE POINT TRANSFER MATRIX OF BEARING EQUATION (10) │
          └────────────────────────────┬───────────────────────────┘
                                        ↓
                        ◇ DEVIDE INTO SHAFT AND CRANK ◇
         CALUCULATE POINT                         CALCULATE POINT
         TRANSFER MATRIX OF BEARING               TRANSFER MATRIX OF CRANK
```

CALCULATE POINT TRANSFER MATRIX OF JOURNAL  EQUATION (5)

CALCULATE POINT TRANSFER MATRIX OF JOURNAL ON AFT  EQUATION (5)

CONVERT FROM CRANK COORDINATE SYSTEMS TO ABSOLUTE COOREINATES  EQUATION (7)

CONVERT STATE QUANTITY FROM AFT JOURNAL TO CRANK ARM ON AFT  EQUATION (8)

CALCULATE POINT TRANSFER MATRIX OF CRANK ARM ON AFT  EQUATION (5)

CONVERT STATE QUANTITY FROM AFT CRANK ARM TO CRANK PIN  EQUATION (9)

CALCULATE POINT TRANSFER MATRIX OF CRANK PIN  EQUATION (5)

CONVERT STATE QUANTITY FROM CRANK PIN TO CRANK ARM ON FORE  EQUATION (9)

CALCULATE POINT TRANSFER MATRIX OF CRANK ARM ON FORE  EQUATION (5)

CONVERT COORDINATES FROM FORE CRANK ARM TO JOURNAL ON FORE  EQUATION (8)

CONVERT FROM ABSOLUTE COORDINATES TO CRANK COORDINATE SYSTEMS  EQUATION (6)

CALCULATE POINT TRANSFER MATRIX OF JOURNAL ON FORE  EQUATION (5)

◇ CALCULATION PERFORMED BETWEEN BEARINGS ON FORE END? ◇

NUMBER BETWEEN BEARINGS−1

CRANK ANGLE+ α °

CALCULATE STATE QUANTITY OF BEARING ON EXTREME LEFT (FORE SIDE)
FORE END IS FREE END (ONLY STATE QUANTITIES OF DISPLACEMENT AND ANGLE)

※2

※1

# F I G. 1 2

※2                                         ※1

NUMBER BETWEEN BEARINGS = EXTREME FORE END

CALCULATE POINT TRANSFER MATRIX OF BEARING    EQUATION(10)

DIVIDE INTO
SHAFT AND CRANK

CALCULATE POINT
TRANSFER MATRIX OF BEARING              CALCULATE POINT
TRANSFER MATRIX OF CRANK

CALCULATE
POINT TRANSFER
MATRIX OF JOURNAL
EQUATION(5)

CALCULATE POINT TRANSFER MATRIX OF
JOURNAL ON FORE    EQUATION(5)

CONVERT FROM ABSOLUTE COORDINATES TO
CRANK COORDINATE SYSTEMS    EQUATION(6)

CONVERT COORDINATES FROM FORE CRANK ARM TO FORE JOURNAL    EQUATION(8)

CALCULATE POINT TRANSFER MATRIX OF CRANK ARM ON FORE    EQUATION(5)

CONVERT STATE QUANTITY FROM CRANK PIN TO CRANK ARM ON FORE    EQUATION(9)

CALCULATE POINT TRANSFER MATRIX OF CRANK PIN    EQUATION(5)

CONVERT STATE QUANTITY FROM CRANK ARM ON AFT TO CRANK PIN    EQUATION(9)

CALCULATE POINT TRANSFER MATRIX OF CRANK ARM ON AFT    EQUATION(5)

CONVERT STATE QUANTITY FROM JOURNAL ON AFT TO CRANK ARM ON AFT EQUATION(8)

CONVERT CRANK COORDINATE SYSTEMS TO ABSOLUTE COORDINATES    EQUATION(7)

CALCULATE POINT TRANSFER MATRIX OF JOURNAL ON AFT    EQUATION(5)

CALCULATION PERFORMED
BETWEEN BEARINGS ON AFT END?

NECESSARY CRANK
ANGLE CALCULATED?

MAKE STATE QUANTITY OF PANEL POINT DIMENSIONAL

CALCULATE CRANKSHAFT DEFLECTION    EQUATION(14)

EXIT

NUMBER BETWEEN BEARINGS+1

# F I G. 1 3 (a)

# F I G. 1 3 (b)

# F I G. 1 4

CYLINDER NUMBER
- No. 1  — No. 5
- No. 2  — No. 6
- No. 3  — No. 7
- No. 4

# F I G. 1 5

CYLINDER NUMBER
- No. 1  — No. 5
- No. 2  — No. 6
- No. 3  — No. 7
- No. 4